# EUROPEAN PATENT APPLICATION

(11) **EP 4 718 889 A1**
(43) Date of publication of application: **01.04.2026**
(21) Application number: 24881664.7
(22) Date of filing: 23.10.2024
(51) Int. Cl.: H04W 4/48

(54) **IN-VEHICLE NETWORKING COMMUNICATION METHOD, ONBOARD WIRELESS COMMUNICATION APPARATUS AND SYSTEM, AND VEHICLE**

(30) Priority: 27.10.2023 CN 202311405770
(71) Applicant: Wuhan Lotus Cars Co., Ltd., Wuhan, Hubei 430056 (CN)
(72) Inventor: LIU, Hongyong, Wuhan, Hubei 430056 (CN)
(74) Representative: Barker Brettell LLP
(86) International application number: PCT/CN2024/126854
(87) International publication number: WO 2025/087300

(57) **Abstract**

The present disclosure relates to an in-vehicle networking communication method. The method is applicable to a first device and includes: performing, based on a narrowband radio technology, narrowband wireless communication with a second device to determine a communication time period for performing broadband wireless communication with the second device; performing, based on a UWB radio technology, broadband wireless communication with the second device in the communication time period using address information of the second device to determine whether the second device is within an allowed distance range of the first device; if it is determined that the second device is not within the allowed distance range of the first device, discarding data from or to the second device, or if it is determined that the second device is within the allowed distance range of the first device, allowing the data from or to the second device. The present invention provides stable and secure wireless communication in a vehicle by combining narrowband and broadband wireless communication, and supports in-vehicle wireless communication networking.

## Description

This application claims priority to Chinese Patent Application No. 202311405770.X, filed with the China National Intellectual Property Administration on October 27, 2023 and entitled "IN-VEHICLE NETWORKING COMMUNICATION METHOD, VEHICLE-MOUNTED WIRELESS COMMUNICATION APPARATUS AND SYSTEM, AND VEHICLE", which is incorporated herein by reference in its entirety.

### TECHNICAL FIELD

The present disclosure relates to the field of communication technologies, and in particular, to an in-vehicle networking communication method, a vehicle-mounted wireless communication apparatus and system, and a vehicle.

### BACKGROUND

With the development of vehicle technology and information technology, vehicles are gradually entering the digital era of the Internet of Vehicles. For example, various sensors, controllers, etc. in a vehicle are connected through a wired network, and the physical media include copper or aluminum cables, optical fibers, etc. Such a wired network may be, for instance, a vehicle-mounted communication bus network, which connects and networks various devices in the vehicle by using communication protocols, such as CAN, LIN, FlexRay, MOST, Ethernet, etc.

However, the traditional in-vehicle networking communication technology suffers from many drawbacks. Due to the development of intelligence and automation, the number of in-vehicle sensors and actuators has increased significantly. If wired technology is used for connection, the length, weight (as well as overall vehicle weight), manufacturing cost, and installation cost of the wiring harnesses will be greatly affected. The significant increase in the number of in-vehicle connectors under wiring-harness connection will further exacerbate in-vehicle electromagnetic interference and other impacts. The number of in-vehicle sensors and actuators is difficult to expand.

It has become the current focus in the development of in-vehicle communication to replace some wired connections with wireless connections in the vehicle to complete data transmission and control functions. However, when various existing wireless communication technologies (for example, Bluetooth, Zigbee, WiFi, or other short-range wireless communication technologies, etc.) are applied in the vehicle, the stability and security of their communication remain to be addressed. Therefore, there is no officially commercialized in-vehicle wireless networking communication solution yet.

### SUMMARY

The purpose of the present disclosure is to overcome the above-mentioned defects in the prior art, and an in-vehicle networking communication method, a vehicle-mounted wireless communication apparatus and system, and a vehicle are provided, so as to provide stable and secure wireless communication in the vehicle and support in-vehicle wireless communication networking.

According to a first aspect of the present disclosure, an in-vehicle networking communication method is proposed, and is applicable to a first device. The method includes: performing, based on a narrowband radio technology, narrowband wireless communication with a second device to determine a communication time period for performing broadband wireless communication with the second device; performing, based on a UWB radio technology, broadband wireless communication with the second device in the communication time period using address information of the second device to determine whether the second device is within an allowed distance range of the first device; if it is determined that the second device is not within the allowed distance range of the first device, discarding data from or to the second device, or if it is determined that the second device is within the allowed distance range of the first device, allowing the data from or to the second device.

According to a second aspect of the present disclosure, an in-vehicle networking communication method is proposed, and is applicable to a second device. The method includes: sending, based on a narrowband radio technology, a state indication message indicating that a broadband radio function of the second device is in a working state, where the broadband radio function corresponds to a UWB radio technology; performing, based on the narrowband radio technology, narrowband communication with a first device to determine a communication time period for performing broadband wireless communication with the first device; performing, based on the UWB radio technology, broadband wireless communication with the first device in the communication time period using address information of the second device.

According to a third aspect of the present disclosure, a vehicle-mounted wireless communication apparatus is proposed, and is applied to a first device. The first device includes: a narrowband communication module, configured to: send, based on a narrowband radio technology, an indication message of a communication time period for performing broadband wireless communication with a second device, or receive, based on the narrowband radio technology, from the second device an indication message of the communication time period for performing broadband wireless communication with the second device; a broadband communication module, configured to: perform, based on a UWB radio technology, broadband wireless communication with the second device in the communication time period; and a processing module, configured to: determine, based on the broadband wireless communication, whether the second device is within an allowed distance range of the first device; if it is determined that the second device is not within the allowed distance range of the first device, discard data from or to the second device, or if it is determined that the second device is within the allowed distance range of the first device, allow the data from or to the second device.

According to a fourth aspect of the present disclosure, a vehicle-mounted wireless communication apparatus is proposed, and is applied to a second device. The second device includes: a narrowband communication module, configured to: send, based on a narrowband radio technology, a state indication message indicating that a broadband radio function of the second device is in a working state, where the broadband radio function corresponds to a UWB radio technology; send, based on the narrowband radio technology, an indication message of a communication time period for performing broadband wireless communication with a first device, or receive, based on the narrowband radio technology, from the first device an indication message of the communication time period for performing broadband wireless communication with the second device; and a broadband communication module, configured to: perform, based on the UWB radio technology, broadband wireless communication with the first device in the communication time period using address information of the second device.

According to a fifth aspect of the present disclosure, a vehicle-mounted wireless communication apparatus is proposed. The apparatus includes: a processor; and a memory for storing computer-executable instructions, where when the computer-executable instructions are executed, the processor is caused to perform the in-vehicle networking communication method according to the aforementioned first aspect or second aspect.

According to a sixth aspect of the present disclosure, a vehicle-mounted wireless communication system is proposed. The system includes: a gateway node device, configured to: perform the in-vehicle networking communication method according to the aforementioned first aspect; and one or more end node devices wirelessly connected to the gateway node device, each of the end node devices being configured to perform the in-vehicle networking communication method according to the aforementioned second aspect, where respective communication time periods for the end node devices to perform, based on the UWB radio technology, broadband wireless communication with the gateway node device using address information of the end node devices do not overlap with one another.

According to a seventh aspect of the present disclosure, a vehicle is proposed. The vehicle includes the vehicle-mounted wireless communication apparatus according to the aforementioned third aspect, fourth aspect, or fifth aspect, or the vehicle-mounted wireless communication system according to the aforementioned sixth aspect.

According to the technical solutions provided in the embodiments of the present disclosure, the time for broadband wireless communication can be determined through wireless narrowband communication, and data transmission with larger bandwidth and lower data transmission interference can be offered through UWB broadband wireless communication, which can provide stable communication transmission. Attacks such as relay attacks can be resisted to prevent information leakage, thereby providing secure and reliable communication transmission. Additionally, the security can be further enhanced by locating the devices, and in-vehicle communication networking can be achieved by using the address information of the devices in the broadband wireless communication.

### BRIEF DESCRIPTION OF DRAWINGS

Other features and advantages of the present invention will be better understood through the following detailed description of preferred embodiments in conjunction with the accompanying drawings, where the same reference numerals denote the same or similar components.
FIG. 1 shows an exemplary scenario in which embodiments of the present disclosure may be applied.
FIG. 2 shows a flowchart of an exemplary in-vehicle networking communication method according to an embodiment of the present disclosure.
FIG. 3 shows a flowchart of an exemplary in-vehicle networking communication method according to an embodiment of the present disclosure.
FIG. 4 shows a flowchart of an exemplary in-vehicle networking communication method with interaction between multiple devices according to an embodiment of the present disclosure.
FIG. 5 shows an exemplary vehicle-mounted wireless communication apparatus according to an embodiment of the present disclosure.
FIG. 6 shows an exemplary vehicle-mounted wireless communication apparatus according to an embodiment of the present disclosure.
FIG. 7 shows an exemplary vehicle-mounted wireless communication apparatus according to an embodiment of the present disclosure.

### DESCRIPTION OF EMBODIMENTS

The following specific implementations are essentially only exemplary and are not intended to limit the application and use. Furthermore, they are not intended to be limited by any expressed or implied theories proposed in the aforementioned technical field, background, summary, or the following description of embodiments.

Traditional in-vehicle networking communication technology relies on connecting various devices using wired technology through wire harnesses. With the development of vehicle intelligence and digitization, wired networking communication has become difficult to meet the increasing application demands for in-vehicle sensors and actuators (for example, autonomous driving functions require the installation of multiple sensors distributed throughout the vehicle, etc.). Moreover, an excessive number of wired-connected sensors and actuators further exacerbate in-vehicle electromagnetic interference. Therefore, as the complexity and functionality of these components in the vehicle increase, it has become increasingly important to transmit large amounts of data in a convenient communication manner. Replacing some wired connections with wireless connections in the vehicle is becoming a development trend of in-vehicle communication.

For example, wireless communication based on a narrowband of 2.4GHz may be used to implement in-vehicle networking communication. However, 2.4GHz is an ISM frequency band commonly used in various radio technologies (such as Bluetooth, Zigbee, and WiFi). Therefore, when there are multiple Bluetooth, Zigbee, and WiFi devices in the vehicle, there is a challenge in terms of frequency band interference, which will affect the stability of their communication. To solve this problem, complex communication protocols need to be adopted, such as Hopping mechanism and error-check mechanism. In addition, 2.4GHz is fixed-frequency communication, and issues, such as relay attacks and information leakage, need to be considered in terms of information security. Therefore, the implementation of relatively complex encryption measures will be required, which leads to complex protocols, reduced communication efficiency, etc.

In addition, although broadband radio technologies such as UWB (Ultra-wideband) can achieve high-bandwidth and low-interference data transmission, they cannot form a network, and mechanisms, such as sleep and wake-up, cannot be addressed by only using broadband data transmission.

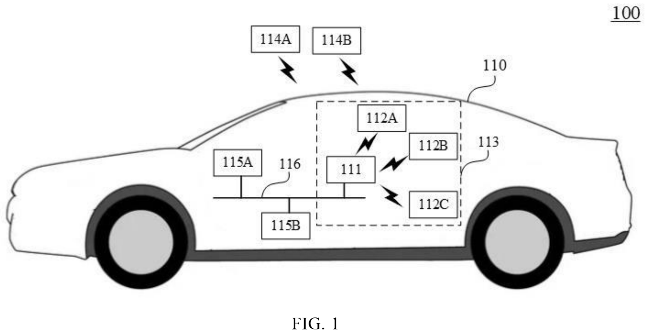

As described below, some exemplary embodiments of the present disclosure provide an in-vehicle networking communication method, a vehicle-mounted wireless communication apparatus and system, and a vehicle. In at least some embodiments, the above-mentioned problems in the prior art are solved by using wireless narrowband communication to determine the time for broadband wireless communication of devices and simultaneously adopting the UWB broadband for formal data exchange, and by determining the positions of the devices through positioning, as described in more detail below in conjunction with FIGs. 1-7.

Referring to FIG. 1, an exemplary scenario 100 in which embodiments of the present disclosure may be applied is shown. The scenario 100 includes a vehicle 110, and the vehicle 110 has multiple vehicle-mounted wireless communication devices 111, 112A, 112B, 112C. The device 111 and the devices 112A-112C (collectively referred to as devices 112) form a vehicle-mounted wireless communication system 113 and are wirelessly connected through a star-shaped wireless network (as indicated by the lightning symbols in FIG. 1). Among them, the device 111 serves as a gateway node device, and the devices 112 serve as end node devices, where each end node device 112 may communicate with the gateway node device 111, and communication between end node devices 112 is relayed via the gateway node device 111. For example, the device 111 and each of the devices 112 may support multiple radio technologies, such as at least one narrowband radio technology (which corresponds to a narrowband wireless communication function) and UWB radio technology (which corresponds to a broadband radio function), so that narrowband communication based on the narrowband radio technology and broadband wireless communication based on the UWB radio technology may be performed between the device 111 and the devices 112. For example, the device 111, as well as the devices 112, may have a narrowband communication module supporting the narrowband wireless communication function and a UWB wireless communication module supporting a broadband wireless communication function, or may have a wireless communication module integrating the narrowband wireless communication function and the UWB wireless communication function.

As shown in FIG. 1, similarly, the device 111 may also perform narrowband communication and broadband wireless communication with devices 114A and 114B located outside the vehicle 110, where the devices 114A and 114B support at least one narrowband radio technology and UWB radio technology. Optionally, the device 111 may also communicate with vehicle-mounted wired communication devices 115A and 115B (collectively referred to as devices 115) of the vehicle 110 through wired connections. For example, the device 111 may be connected to the devices 115 through a vehicle-mounted communication bus network 116 (such as CAN, LIN, FlexRay, MOST, and Ethernet). Therefore, the gateway node device 111 may also implement communication between the end node devices 112 in the vehicle-mounted wireless communication system 113 and the vehicle-mounted wired communication devices 115 in the vehicle-mounted communication bus network 116. It should be understood that the number of the devices 112, 114, and 115 in FIG. 1 is only for illustrative purposes and is not intended to limit the vehicle-mounted wireless communication system or the vehicle-mounted communication bus network provided in the embodiments of the present disclosure. The vehicle-mounted wireless communication system or the vehicle-mounted communication bus network may include a greater or smaller number of devices.

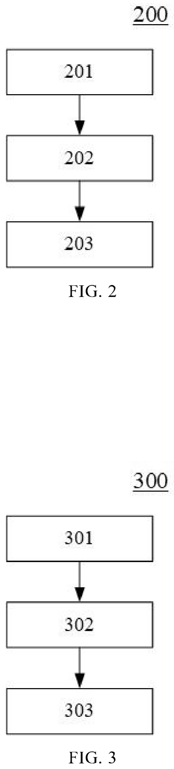

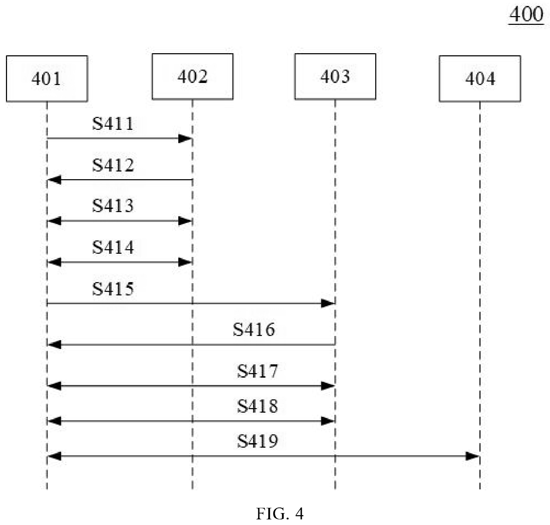

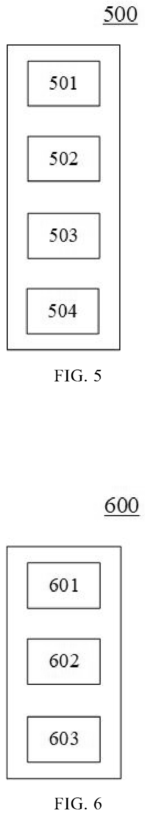

Referring to FIG. 2, a flowchart of an exemplary in-vehicle networking communication method 200 according to an embodiment of the present disclosure is shown. The method 200 may be applied to, for example, the vehicle 110 of FIG. 1, and may be executed by any one of, for example, the vehicle-mounted wireless communication device 111 of FIG. 1, the vehicle-mounted wireless communication device 401 of FIG. 4, or the vehicle-mounted wireless communication apparatus 500 of FIG. 5. As shown in FIG. 2, the method 200 includes steps 201-203.

In step 201, a first device performs, based on a narrowband radio technology, narrowband wireless communication with a second device to determine a communication time period for performing broadband wireless communication with the second device. In this step, the communication time period for the broadband wireless communication between the two devices may be determined through the exchange via the narrowband wireless communication, so that data transmission does not need to use the narrowband 2.4GHz frequency band, which is subject to significant interference, but uses broadband transmission with higher bandwidth and lower interference, to improve communication transmission efficiency. For example, the communication frequency band of broadband wireless communication adopting a UWB radio technology is above 5GHz, which can avoid congestion in in-vehicle communication channels.

For example, the device 111 (i.e., the first device) of FIG. 1 may send a data frame or message based on a narrowband radio technology. This data frame or message includes address information that is addressed, for example, the device 112A (i.e., the second device) (for example, a device address of the device 112A, such as a MAC address, etc.), and the data frame or message may also include a sending time period for sending data to the device 112A based on the UWB radio technology and a receiving time period for receiving data from the device 112A based on the UWB radio technology. For example, the data frame or message may include a specific field or have a specific length to indicate that it is a communication time period announcement frame or message. Correspondingly, when the device 112A receives the communication time period announcement frame or message based on the narrowband radio technology, the device 112A may detect that the data frame or message is directed to the device 112A based on the address information contained in the data frame or message, and parse the data frame or message to obtain the indicated communication time period to perform broadband communication in the communication time period. When another device 112B receives the communication time period announcement frame or message based on the narrowband radio technology, the device 112B may detect that the data frame or message is not directed to the device 112B based on the address information contained in the data frame or message, and the device 112B may avoid performing broadband wireless transmission to the device 111 in the communication time period for the device 112A (for example, by parsing the data frame or message to obtain the indicated communication time period).

Alternatively, the device 111 of FIG. 1 may receive from the device 112A a data frame or message sent by the device 112A based on the narrowband radio technology. This data frame or message includes address information of the device that initiates addressing (for example, the device address of the device 112A, such as a MAC address, etc.), and the data frame or message may also include a sending time period for sending data to the device 112A based on the UWB radio technology and a receiving time period for receiving data from the device 112A based on the UWB radio technology.

In some examples, each of the device 111 and the device 112A may send a data frame or message based on the narrowband radio technology to notify a sending time period and a receiving time period, and confirm the corresponding sending time period and the corresponding receiving time period after negotiating and reaching an agreement. For example, the device 111 and the device 112A may determine the broadband communication time periods based on data transmission requirements, to improve data transmission efficiency.

In step 202, the first device performs, based on the UWB radio technology, broadband wireless communication with the second device in the communication time period using address information of the second device to determine whether the second device is within an allowed distance range of the first device. For example, the device 111 may receive a data frame or message sent by the device 112A based on the UWB radio technology in the determined sending time period of the device 112A (i.e., the receiving time period of the device 111), where this data frame or message may include address information of the device 112A that initiates addressing; and/or, the device 111 may send a data frame or message based on the UWB radio technology in the determined receiving time period of the device 112A (i.e., the sending time period of the device 111), where the data frame or message may include address information of the device 112A that is addressed. Moreover, through the transmission of data frames or messages between the device 111 and the device 112A, the device 112A can be positioned relative to the device 111, to determine whether the device 112A is within the allowed range of the device 111. In this step, by adding the address information of a device in the broadband data exchange, the broadband wireless communication between different devices 112 and the device 111 can be scheduled, so that different devices 112 can communicate with the device 111 in non-overlapping communication time periods, thereby enabling wireless networking in the vehicle. In addition, compared with the disadvantage of low positioning accuracy of narrowband radio technologies, such as Bluetooth, Zigbee, and WiFi, the UWB radio technology has the dual advantages of real-time positioning and precise positioning, and the positioning delay time is much lower than that of the above-mentioned narrowband radio technologies. In addition, a positioning accuracy of better than centimeter level can be achieved, thus enabling quick and accurate determination of the distance of the second device relative to the first device.

In step 203, if it is determined that the second device is not within the allowed distance range of the first device, data from or to the second device is discarded, or if it is determined that the second device is within the allowed distance range of the first device, the data from or to the second device is allowed. For example, the device 111 may compare the distance to the device 112A that is determined based on the UWB technology with a threshold distance. If the distance exceeds the threshold distance, it may be determined that the device 112A is not within the allowed distance range of the device 111; otherwise, if the distance is less than the threshold distance, it may be determined that the device 112A is within the allowed range of the device 111. For example, when the device 112A is not within the allowed distance range of the device 111, data going to the device 112A (from the device 111 or other devices) or data coming from the device 112A may be discarded. For example, when the device 112A is within the allowed distance range of the device 111, the data may be considered legitimate, and data going to or coming from the device 112A may be allowed. In this step, by also locating the device during the UWB communication, it can be ensured that the wireless communication device is effective within, for example, the in-vehicle range, thereby avoiding long-distance attacks. For example, the device 111 may receive data transmission from a wireless communication device 114 outside the vehicle, and positioning by distance can prevent the wireless devices outside the vehicle from affecting the security of in-vehicle wireless communication transmission. In addition, the UWB broadband communication itself is not easy to be relayed, which can significantly reduce information security protection measures.

In some examples, the first device and the second device may interact via narrowband wireless communication or broadband wireless communication to determine other communication parameters for broadband wireless communication, such as communication rate and modulation mode.

In some examples, before determining the communication time period for performing broadband wireless communication with the second device, the method 200 further includes the following step: performing narrowband wireless communication with the second device based on the narrowband radio technology to determine a state of a broadband radio function of the second device, where the broadband radio function corresponds to the UWB radio technology. For example, the broadband radio function (or module) of the second device may have multiple states, such as a sleep state and a working state. For example, the broadband radio function (or module) of the device 112A may enter the sleep state after the broadband wireless communication is ended or at the end of the communication time period, to save energy.

In some examples, the performing narrowband wireless communication with the second device based on the narrowband radio technology to determine the state of the broadband radio function of the second device may include: receiving a state indication message indicating that the broadband radio function of the second device is in a working state from the second device based on the narrowband radio technology, where the state indication message includes the address information of the second device. For example, the device 112A may be passively woken up in response to a wake-up message sent by the device 111 and send a state indication message through narrowband communication to indicate that the device 112A is woken up. Alternatively, the device 112A may be actively woken up in response to an operation of a vehicle component associated with the device 112A, and send a state indication message through narrowband communication to indicate that the device 112A is woken up.

In some examples, before receiving the state indication message indicating that the broadband radio function of the second device is in the working state from the second device, the method 200 may further include: sending a wake-up message based on the narrowband radio technology, where the wake-up message includes the address information of the second device and is used to trigger the second device to wake up the broadband radio function. For example, a wake-up message command may be sent through the narrowband communication of the device 111 to actively wake up the broadband radio function (or module) of the device 112A, which is, for example, Wake-on-Radio technology.

In some examples, the performing broadband wireless communication with the second device based on the UWB radio technology using the address information of the second device in the communication time period may include receiving from the second device first data for transmission to a target receiving device, and the method 200 may further include: determining address information of the target receiving device, where the target receiving device is different from the first device; and forwarding the first data according to the address information of the target receiving device. Similar to what is described above, the address information of the target receiving device that is addressed may be embedded in the data frame to implement data forwarding.

In some examples, the determining the address information of the target receiving device may include: parsing the first data to obtain the address information of the target receiving device.

In some examples, the first device is communicatively connected to the target receiving device wirelessly, and the forwarding the first data according to the address information of the target receiving device may include: performing narrowband wireless communication with the target receiving device based on the narrowband radio technology to determine a first target communication time period for performing broadband wireless communication with the target receiving device; and forwarding the first data to the target receiving device based on the UWB radio technology using the address information of the target receiving device in the first target communication time period. For example, the target receiving device may be, for instance, the device 112B of FIG. 1. Similar to the steps described above, the device 111 needs to determine, through the narrowband radio communication technology, the target communication time period for performing broadband wireless communication with the device 112B, and the device 111 forwards the data from the device 112A to the device 112B using the UWB radio technology based on the determined target communication time period.

In some examples, the method 200 may further include: receiving, from a target sending device communicatively connected to the first device, second data for transmission to the second device; and forwarding the second data according to the address information of the second device. For example, the target sending device may be, for instance, the device 112C or the device 115A of FIG. 1.

In some examples, the first device is communicatively connected to the target sending device in a wired manner, and the forwarding the second data according to the address information of the second device may include: converting the second data which is based on a wired communication protocol format according to a broadband wireless communication protocol; and sending the converted second data to the second device based on the UWB radio technology using the address information of the second device in the communication time period. For example, the device 111 has a wired communication module and is connected to the device 115A in a wired manner. The device 111 converts, based on a wireless communication protocol, data which is based on a wired communication protocol format and is from the device 115A, and forwards the data, which is from the device 115A and is converted, to the device 112A through the UWB radio technology in the communication time period with the device 112A that is determined based on the narrowband radio technology.

In some examples, the first device is communicatively connected to the target sending device wirelessly, and the method 200 may further include: performing narrowband wireless communication with the target sending device based on the narrowband radio technology to determine a second target communication time period for performing broadband wireless communication with the target sending device; receiving the second data from the target sending device based on the UWB radio technology using address information of the target sending device in the second target communication time period; and forwarding the second data to the second device based on the UWB radio technology using the address information of the second device in the communication time period. For example, similar to the steps described above, the device 111 needs to determine, through the narrowband radio communication technology, a target communication time period for broadband wireless communication with the device 112C. In addition, the device 111 receives data from the device 112C using the UWB radio technology based on the determined target communication time period, and forwards the data from the device 112C to the device 112A through the UWB radio technology in the communication time period with the device 112A that is determined based on the narrowband radio technology.

In some examples, the method 200 may further include: sending a sleep message to the second device based on the narrowband radio technology, where the sleep message includes the address information of the second device and is used to trigger a broadband radio function of the second device to enter a sleep state. For example, when the vehicle as a whole changes from an in-use state to a non-use state (such as when the user turns off the power unit or locks the vehicle), the gateway node device 111 may send a sleep message command to one or more or all of the end node devices through narrowband, to make their broadband radio functions enter into a sleep state. Correspondingly, when the vehicle as a whole changes from the non-use state to the in-use state (such as when the user starts the power unit or unlocks the vehicle), the gateway node device 111 may send a wake-up message command to the corresponding end node devices among all the end node devices through narrowband based on data transmission requirements, to make their broadband radio functions enter into a wake-up state.

In some examples, the step 203 of the method 200 may include: performing broadband wireless communication with the second device based on the UWB radio technology in the communication time period, and determining a measured distance between the first device and the second device via a ranging algorithm using ranging data that is transmitted between the first device and the second device through broadband wireless communication; and determining whether the measured distance is within the allowed distance range. For example, when performing broadband data exchange through UWB technology, the distance between the device 111 and the device 112A may be positioned based on the ranging data transmitted therewith. For example, as described in the IEEE802.15.4z-2020 standard, a measured distance between two devices may be determined by adopting a TOF ranging algorithm and using a marker RMARKER carried in a transmitted message. The TOF ranging algorithm may be, for example, SS-TWR, DS-TWR, OWR/TDOA, etc. For example, the measured distance between the two devices may also be determined by adopting various ranging algorithms known in the art or to be developed in the future and using other types of ranging data carried in the message. For example, whether the device 112A is within the allowed distance range of the device 111 may be determined by comparing the measured distance with a threshold distance.

In some examples, the narrowband radio technology may include, but is not limited to, a Bluetooth radio technology, a Zigbee radio technology, a WiFi radio technology, an NFC radio technology, an RFID radio technology, a narrowband radio technology defined in UWB standards (including existing or future-formed UWB standards), and various other narrowband radio technologies to be developed in the future, etc.

In some examples, the first device is a gateway node device of a vehicle-mounted wireless communication system.

In some examples, the second device is an end node device of a vehicle-mounted wireless communication system and is associated with a vehicle component.

In some examples, the vehicle component may include, but is not limited to, a control module provided on a door, a seat control module, a massage control module, a vehicle-mounted sensor, etc. For example, the vehicle component may be a control module on a door (for example, a window switch, a door switch, etc.), a sun/rain sensor, a seat control module, a massage control module, a sunroof control module, a tailgate control module. For example, these vehicle components may be battery-powered and disposed at positions far from the gateway node device, and connecting such vehicle components through wired communication may be cumbersome and costly.

Referring to FIG. 3, a flowchart of an exemplary in-vehicle networking communication method 300 according to an embodiment of the present disclosure is shown. The method 300 may be applicable to, for example, the vehicle 110 of FIG. 1, and may be executed by any one of, for example, the vehicle-mounted wireless communication device 112 of FIG. 1, the vehicle-mounted wireless communication device 402 of FIG. 4, or the vehicle-mounted wireless communication apparatus 600 of FIG. 6. As shown in FIG. 3, the method 300 includes steps 301-303.

In step 301, a state indication message indicating that a broadband radio function of a second device is in a working state is sent based on a narrowband radio technology, where the broadband radio function corresponds to a UWB radio technology. For example, the device 112A (i.e., the second device) may be passively woken up in response to a wake-up message sent by the device 111 (i.e., a first device), and send a state indication message through narrowband communication to indicate that the device 112A is woken up. Alternatively, the device 112A may be actively woken up in response to an operation of a vehicle component associated with the device 112A, and send a state indication message through narrowband communication to indicate that the device 112A is woken up.

In step 302, narrowband communication is performed with the first device based on the narrowband radio technology to determine a communication time period for performing broadband wireless communication with the first device. For example, this step may be implemented in a manner similar to the description regarding the step 201 of the method 200 above.

In step 303, broadband wireless communication is performed with the first device based on the UWB radio technology using address information of the second device in the communication time period. For example, this step may be implemented in a manner similar to the description regarding the step 202 of the method 200 above.

In some examples, before sending the state indication message indicating that the broadband radio function of the second device is in the working state, the method 300 further includes the following step: receiving a wake-up message sent by the first device based on the narrowband radio technology; and if the wake-up message includes an address of the second device, triggering the second device to wake up the broadband radio function, where the broadband radio function corresponds to the UWB radio technology.

In some examples, the step 303 of the method 300 may include: transmitting first data for transmission to a target receiving device, where the first data includes the address information of the second device and address information of the target receiving device.

In some examples, the step 303 may include: receiving second data transmitted by the first device based on the UWB radio technology; determining whether a destination recipient of the second data includes the second device; and if it is determined that the destination recipient of the second data does not include the second device, discarding the second data.

In some examples, the second device is an end node device of a vehicle-mounted wireless communication system, and the first device is a gateway node device of the vehicle-mounted wireless communication system.

In some examples, the second device is associated with a vehicle component, and the method 300 may further include: in response to detecting an operation on the vehicle component, enabling the broadband radio function of the second device to enter the working state; and the step 301 may include: when the broadband radio function of the second device is in the working state, sending the state indication message indicating that the broadband radio function of the second device is in the working state based on the narrowband radio technology.

In some examples, the method 300 may further include: receiving a sleep message sent by the first device based on the narrowband radio technology; determining whether a destination recipient of the sleep message includes the second device; and if it is determined that the destination recipient of the sleep message includes the second device, enabling the broadband radio function of the second device to enter a sleep state.

In some examples, the narrowband radio technology may include, but is not limited to, a Bluetooth radio technology, a Zigbee radio technology, a WiFi radio technology, an NFC radio technology, an RFID radio technology, a narrowband radio technology defined in UWB standards (including existing or future-formed UWB standards), and various other narrowband radio technologies to be developed in the future, etc.

Referring to FIG. 4, a flowchart of an exemplary in-vehicle networking communication method 400 with interaction between multiple devices according to an embodiment of the present disclosure is shown. The multiple devices include a first device 401, as well as a second device 402, a third device 403, and a fourth device 404 that are communicatively connected to the first device 401. The first device 401 may be, for example, the vehicle-mounted wireless communication device 111 of FIG. 1, the second device 402 may be, for example, the vehicle-mounted wireless communication device 112 or the device 114 of FIG. 1, the third device 403 may be, for example, the vehicle-mounted wireless communication device 112 or the device 114 of FIG. 1, and the fourth device 404 may be, for example, the vehicle-mounted wired communication device 115 of FIG. 1. The method 400 may include multiple steps S411-S419 to implement communication between the multiple devices, where at least some of the steps are optional rather than mandatory.

In step S411, the first device 401 sends a wake-up message based on a narrowband radio technology, where the wake-up message includes address information of the second device 402 and is used to trigger the second device 402 to wake up a broadband radio function.

In step S412, the first device 401 receives, based on the narrowband radio technology, from the second device 402 a state indication message indicating that the broadband radio function of the second device 402 is in a working state, where the state indication message includes the address information of the second device 402. For example, the second device 402 may be passively woken up in response to the wake-up message sent by the first device 401 and send the state indication message through narrowband communication to indicate that the device is woken up. For example, the second device 402 may be actively woken up in response to an operation of a vehicle component associated with the second device 402 and send a state indication message through narrowband communication to indicate that the device is woken up; in this case, the step S411 is not necessary.

In step S413, the first device 401 performs narrowband wireless communication with the second device 402 based on the narrowband radio technology to determine a communication time period for performing broadband wireless communication with the second device 413.

In step S414, the first device 401 performs broadband wireless communication with the second device 402 based on a UWB radio technology using the address information of the second device 402 in the communication time period. For example, the first device 401 may receive data from the second device 402 via the UWB radio technology, or transmit data to the second device 402 via the UWB radio technology. Moreover, the first device 401 may determine a distance to the second device 402 through broadband wireless communication, to determine whether the data from or to the second device 402 is legitimate according to the distance. For example, the target receiving device for the data sent from the second device 402 to the first device 401 may be the third device 403 or the fourth device 404.

In step S415, similar to the step S411, the first device 401 sends a wake-up message based on a narrowband radio technology, where the wake-up message includes address information of the third device 403 and is used to trigger the third device 403 to wake up a broadband radio function.

In step S416, the first device 401 receives, based on the narrowband radio technology, from the third device 403 a state indication message indicating that the broadband radio function of the third device 403 is in a working state, where the state indication message includes the address information of the second device 403. For example, the third device 403 may be passively woken up in response to the wake-up message sent by the first device 401 and send the state indication message through narrowband communication to indicate that the device is woken up.

In step S417, similar to the step S413, the first device 401 performs narrowband wireless communication with the third device 403 based on the narrowband radio technology to determine a target communication time period for performing broadband wireless communication with the third device 413.

In step S418, the first device 401 performs broadband wireless communication with the third device 403 based on the UWB radio technology using the address information of the third device 403 in the target communication time period. For example, the first device 401 may forward the data received from the second device 402 to the third device 403 via the UWB radio technology. Similar to the step 414, the first device 401 may determine a distance to the third device 403 through broadband wireless communication, to determine whether the data from or to the third device 403 is legitimate according to the distance.

Similarly, when the third device 403, as a target sending device, intends to transmit data to the second device 402, the third device 403 may interact with the first device 401 in a manner similar to the steps S411-S414, and the second device 402 may interact with the first device 401 in a manner similar to the steps S415-S418 to receive the data from the third device 403 that is forwarded by the first device 401. Moreover, the communication time period for performing broadband wireless communication between the first device 401 and the second device 402 does not overlap with the communication time period for performing broadband wireless communication between the first device 401 and the third device 403.

In step S419, the first device 401 may convert the data, which is based on a wireless communication protocol format and is from the second device 402, according to a wired communication protocol, and forward the data, which is from the second device 402 and is converted, to the fourth device 404 through a wired communication connection.

Similarly, when the fourth device 404, as a target sending device, intends to transmit data to the second device 402, the first device 401 may receive data from the fourth device 404 through the wired communication connection, and convert the data, which is based on the wired communication protocol format, according to the wireless communication protocol. The first device 401 may interact with the second device 402 in a manner similar to the steps S411-S414, and forward the converted data to the second device 402.

Referring to FIG. 5, an exemplary vehicle-mounted wireless communication apparatus 500 according to an embodiment of the present disclosure is shown. The modules of the apparatus 500 may be implemented by means of software, hardware (for example, an integrated circuit, an FPGA, etc.), or a combination of software and hardware. The apparatus 500 may be, for example, the device 111 of FIG. 1 or the device 401 of FIG. 4 (i.e., the first device). As shown in FIG. 5, the apparatus 500 includes an information narrowband communication module 501, a broadband communication module 502, and a processing module 503.

The narrowband communication module 501 is configured to send, based on a narrowband radio technology, an indication message of a communication time period for performing broadband wireless communication with a second device, or receive, based on the narrowband radio technology, from the second device an indication message of the communication time period for performing broadband wireless communication with the second device.

The broadband communication module 502 is configured to perform broadband wireless communication with the second device based on a UWB radio technology using address information of the second device in the communication time period.

The processing module 503 is configured to: determine whether the second device is within an allowed distance range of the apparatus 500 based on the broadband wireless communication; if it is determined that the second device is not within the allowed distance range of the apparatus 500, discard data from or to the second device, or if it is determined that the second device is within the allowed distance range of the apparatus 500, allow the data from or to the second device.

Optionally, the apparatus 500 may further include a wired communication module 504. The wired communication module 504 is configured to communicate with a vehicle-mounted wired communication device that is connected to the apparatus 500 in a wired manner, to act as a relay to enable mutual communication between, for example, the second device and the vehicle-mounted wired communication device.

The aforementioned narrowband communication module 501, broadband communication module 502, processing module 503, and wired communication module 504 may also be configured to implement one or more corresponding steps in the aforementioned method 200, which will not be described in detail.

Referring to FIG. 6, an exemplary vehicle-mounted wireless communication apparatus 600 according to an embodiment of the present disclosure is shown. The modules of the apparatus 600 may be implemented by means of software, hardware (for example, an integrated circuit, an FPGA, etc.), or a combination of software and hardware. The apparatus 600 may be, for example, the device 112 of FIG. 1 or the device 402 of FIG. 4 (i.e., the second device). As shown in FIG. 6, the apparatus 600 includes an information narrowband communication module 601 and a broadband communication module 602.

The narrowband communication module 601 is configured to: send, based on a narrowband radio technology, a state indication message indicating that a broadband radio function of the apparatus 600 is in a working state, where the broadband radio function corresponds to a UWB radio technology; and send, based on the narrowband radio technology, an indication message of a communication time period for performing broadband wireless communication with a first device, or receive, based on the narrowband radio technology, from the first device an indication message of the communication time period for performing broadband wireless communication with the second device.

The broadband communication module 602 is configured to perform broadband wireless communication with the first device based on the UWB radio technology using address information of the apparatus 600 in the communication time period.

Optionally, the apparatus 600 may further include a processing module 603 for processing data.

The aforementioned narrowband communication module 601, broadband communication module 602, and processing module 603 may also be configured to implement one or more corresponding steps in the aforementioned method 300, which will not be described in detail.

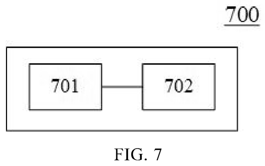

Referring to FIG. 7, a block diagram of an exemplary vehicle-mounted wireless communication apparatus 700 according to an embodiment of the present disclosure is shown. The apparatus 700 may be, for example, the vehicle-mounted wireless communication device 111 or 112 of FIG. 1, or the vehicle-mounted wireless communication device 401 or 402 of FIG. 4. The apparatus 700 includes at least one processor 701 and a memory 702 coupled to the at least one processor 701. The memory 702 is used to store computer-readable instructions that, when executed by the at least one processor 701, cause the processor 701 to perform the methods in the above embodiments (for example, any one or more steps of the aforementioned method 200 or 300 or 400).

Referring back to FIG. 1, the vehicle 100 may include one or more of the vehicle-mounted wireless communication devices 111 and 112 of FIG. 1, the vehicle-mounted wireless communication system 113 of FIG. 1, the vehicle-mounted wireless communication devices 401 and 402 of FIG. 4, the vehicle-mounted wireless communication apparatus 500 of FIG. 5, or the vehicle-mounted wireless communication apparatus 600 of FIG. 6, to implement any one or more steps of the aforementioned in-vehicle networking communication methods.

The present disclosure also provides a vehicle-mounted wireless communication system (for example, the vehicle-mounted wireless communication system 113 of FIG. 1). The system includes: a gateway node device (for example, any one of the vehicle-mounted wireless communication device 111 of FIG. 1, the device 401 of FIG. 4, the vehicle-mounted wireless communication apparatus 500 of FIG. 5, or the vehicle-mounted wireless communication apparatus of FIG. 7), configured to perform any one or more steps of the aforementioned method 200, etc.; and one or more end node devices (for example, any one of the vehicle-mounted wireless communication device 112 of FIG. 1, the device 402 or 403 of FIG. 4, the vehicle-mounted wireless communication apparatus 600 of FIG. 6, or the vehicle-mounted wireless communication apparatus of FIG. 7) wirelessly connected to the gateway node device, configured to perform any one or more steps of the aforementioned method 300, etc.

As discussed above, although the present application discusses the in-vehicle networking communication methods in vehicle applications, the methods, apparatuses, and systems of the present disclosure are also applicable to other arrangements that require implementing networking communication in transportation vehicles.

The foregoing discussions are merely disclosures and descriptions of exemplary embodiments of the present invention. Through these discussions, as well as the accompanying drawings and claims, those skilled in the art will readily recognize that various changes, modifications, and variations can be made to the present invention without departing from the spirit and scope of the present invention as defined by the appended claims.

## Claims

1. An in-vehicle networking communication method, applicable to a first device, the method comprising:
performing, based on a narrowband radio technology, narrowband wireless communication with a second device to determine a communication time period for performing broadband wireless communication with the second device;
performing, based on a UWB radio technology, broadband wireless communication with the second device in the communication time period using address information of the second device to determine whether the second device is within an allowed distance range of the first device;
if it is determined that the second device is not within the allowed distance range of the first device, discarding data from or to the second device, or
if it is determined that the second device is within the allowed distance range of the first device, allowing the data from or to the second device.

2. The method according to claim 1, wherein before determining the communication time period for performing broadband wireless communication with the second device, the method further comprises:
performing, based on the narrowband radio technology, narrowband wireless communication with the second device to determine a state of a broadband radio function of the second device, wherein the broadband radio function corresponds to the UWB radio technology.

3. The method according to claim 2, wherein the performing, based on the narrowband radio technology, narrowband wireless communication with the second device to determine the state of the broadband radio function of the second device comprises:
receiving, based on the narrowband radio technology, from the second device a state indication message indicating that the broadband radio function of the second device is in a working state, the state indication message comprising the address information of the second device.

4. The method according to claim 3, wherein before receiving from the second device the state indication message indicating that the broadband radio function of the second device is in the working state, the method further comprises:
sending a wake-up message based on the narrowband radio technology, the wake-up message comprising the address information of the second device and being used to trigger the second device to wake up the broadband radio function.

5. The method according to claim 1, wherein the performing, based on the UWB radio technology, broadband wireless communication with the second device in the communication time period using the address information of the second device comprises: receiving, from the second device, first data for transmission to a target receiving device; and the method further comprises:
determining address information of the target receiving device, the target receiving device being different from the first device;
forwarding the first data according to the address information of the target receiving device.

6. The method according to claim 5, wherein the determining the address information of the target receiving device comprises: parsing the first data to obtain the address information of the target receiving device.

7. The method according to claim 5, wherein the first device is communicatively connected to the target receiving device in a wired manner, and
the forwarding the first data according to the address information of the target receiving device comprises:
converting, according to a wired communication protocol, the first data which is based on a broadband wireless communication protocol format;
sending the converted first data to the target receiving device through wired communication.

8. The method according to claim 5, wherein the first device is communicatively connected to the target receiving device in a wireless manner, and
the forwarding the first data according to the address information of the target receiving device comprises:
performing, based on the narrowband radio technology, narrowband wireless communication with the target receiving device to determine a first target communication time period for performing broadband wireless communication with the target receiving device;
forwarding, based on the UWB radio technology, the first data to the target receiving device in the first target communication time period using the address information of the target receiving device.

9. The method according to claim 1, further comprising:
receiving, from a target sending device communicatively connected to the first device, second data for transmission to the second device;
forwarding the second data according to the address information of the second device.

10. The method according to claim 9, wherein the first device is communicatively connected to the target sending device in a wired manner, and
the forwarding the second data according to the address information of the second device comprises:
converting, according to a broadband wireless communication protocol, the second data which is based on a wired communication protocol format;
sending, based on the UWB radio technology, the converted second data to the second device in the communication time period using the address information of the second device.

11. The method according to claim 10, wherein the first device is communicatively connected to the target sending device in a wireless manner, and
the method further comprises: performing, based on the narrowband radio technology, narrowband wireless communication with the target sending device to determine a second target communication time period for performing broadband wireless communication with the target sending device;
the receiving, from the target sending device, the second data comprises: receiving, based on the UWB radio technology, from the target sending device the second data in the second target communication time period using address information of the target sending device;
the forwarding the second data according to the address information of the second device comprises: forwarding, based on the UWB radio technology, the second data to the second device in the communication time period using the address information of the second device.

12. The method according to claim 1, further comprising:
sending a sleep message to the second device based on the narrowband radio technology, the sleep message comprising the address information of the second device and being used to trigger a broadband radio function of the second device to enter a sleep state.

13. The method according to claim 1, wherein the performing, based on the UWB radio technology, broadband wireless communication with the second device in the communication time period using the address information of the second device to determine whether the second device is within the allowed distance range of the first device comprises:
performing, based on the UWB radio technology, broadband wireless communication with the second device in the communication time period, and determining, via a ranging algorithm, a measured distance between the first device and the second device using ranging data transmitted between the first device and the second device through broadband wireless communication;
determining whether the measured distance is within the allowed distance range.

14. The method according to claim 1, wherein the narrowband radio technology comprises one of the following: a Bluetooth radio technology, a Zigbee radio technology, a WiFi radio technology, an NFC radio technology, an RFID radio technology, a narrowband radio technology defined in a UWB standard.

15. The method according to claim 1, wherein the first device is a gateway node device of a vehicle-mounted wireless communication system.

16. The method according to claim 1, wherein the second device is an end node device of a vehicle-mounted wireless communication system and is associated with a vehicle component.

17. The method according to claim 16, wherein the vehicle component comprises at least one of the following: a control module provided on a door, a seat control module, a massage control module, a sunroof control module, a tailgate control module, or a vehicle-mounted sensor.

18. An in-vehicle networking communication method, applicable to a second device, the method comprising:
sending, based on a narrowband radio technology, a state indication message indicating that a broadband radio function of the second device is in a working state, wherein the broadband radio function corresponds to a UWB radio technology;
performing, based on the narrowband radio technology, narrowband communication with a first device to determine a communication time period for performing broadband wireless communication with the first device;
performing, based on the UWB radio technology, broadband wireless communication with the first device in the communication time period using address information of the second device.

19. The in-vehicle networking communication method according to claim 18, wherein before sending the state indication message indicating that the broadband radio function of the second device is in the working state, the method further comprises:
receiving, based on the narrowband radio technology, a wake-up message sent by the first device;
if the wake-up message comprises an address of the second device, triggering the second device to wake up the broadband radio function, wherein the broadband radio function corresponds to the UWB radio technology.

20. The method according to claim 18, wherein the performing, based on the UWB radio technology, broadband wireless communication with the first device in the communication time period using the address information of the second device comprises: transmitting first data for transmission to a target receiving device, the first data comprising the address information of the second device and address information of the target receiving device.

21. The method according to claim 18, wherein the performing, based on the UWB radio technology, broadband wireless communication with the first device in the communication time period using the address information of the second device comprises:
receiving, based on the UWB radio technology, second data transmitted by the first device;
determining whether a destination recipient of the second data comprises the second device;
if it is determined that the destination recipient of the second data does not comprise the second device, discarding the second data.

22. The method according to claim 18, wherein the second device is an end node device of a vehicle-mounted wireless communication system, and the first device is a gateway node device of the vehicle-mounted wireless communication system.

23. The method according to claim 18, wherein the second device is associated with a vehicle component, and
the method further comprises: in response to detecting an operation on the vehicle component, enabling the broadband radio function of the second device to enter the working state;
the sending, based on the narrowband radio technology, the state indication message indicating that the broadband radio function of the second device is in the working state comprises: when the broadband radio function of the second device is in the working state, sending, based on the narrowband radio technology, the state indication message indicating that the broadband radio function of the second device is in the working state.

24. The method according to claim 18, further comprising:
receiving, based on the narrowband radio technology, a sleep message sent by the first device;
determining whether a destination recipient of the sleep message comprises the second device;
if it is determined that the destination recipient of the sleep message comprises the second device, enabling the broadband radio function of the second device to enter a sleep state.

25. The method according to claim 18, wherein the narrowband radio technology comprises one of the following: a Bluetooth radio technology, a Zigbee radio technology, a WiFi radio technology, an NFC radio technology, an RFID radio technology, a narrowband radio technology defined in a UWB standard.

26. A vehicle-mounted wireless communication apparatus, applied to a first device, the first device comprising:
a narrowband communication module, configured to: send, based on a narrowband radio technology, an indication message of a communication time period for performing broadband wireless communication with a second device, or receive, based on the narrowband radio technology, from the second device an indication message of the communication time period for performing broadband wireless communication with the second device;
a broadband communication module, configured to: perform, based on a UWB radio technology, broadband wireless communication with the second device in the communication time period using address information of the second device; and
a processing module, configured to:
determine, based on the broadband wireless communication, whether the second device is within an allowed distance range of the first device;
if it is determined that the second device is not within the allowed distance range of the first device, discard data from or to the second device, or
if it is determined that the second device is within the allowed distance range of the first device, allow the data from or to the second device.

27. A vehicle-mounted wireless communication apparatus, applied to a second device, the second device comprising:
a narrowband communication module, configured to:
send, based on a narrowband radio technology, a state indication message indicating that a broadband radio function of the second device is in a working state, wherein the broadband radio function corresponds to a UWB radio technology;
send, based on the narrowband radio technology, an indication message of a communication time period for performing broadband wireless communication with a first device, or receive, based on the narrowband radio technology, from the first device an indication message of the communication time period for performing broadband wireless communication with the second device;
a broadband communication module, configured to: perform, based on the UWB radio technology, broadband wireless communication with the first device in the communication time period using address information of the second device.

28. A vehicle-mounted wireless communication apparatus, comprising:
a processor; and
a memory for storing computer-executable instructions, wherein when the computer-executable instructions are executed, the processor is caused to perform the in-vehicle networking communication method according to any one of claims 1-25.

29. A vehicle-mounted wireless communication system, comprising:
a gateway node device, configured to: perform the in-vehicle networking communication method according to any one of claims 1-17; and
one or more end node devices wirelessly connected to the gateway node device, each of the end node devices being configured to perform the in-vehicle networking communication method according to any one of claims 18-25, wherein respective communication time periods for the end node devices to perform, based on the UWB radio technology, broadband wireless communication with the gateway node device using address information of the end node devices do not overlap with one another.

30. A vehicle, comprising the vehicle-mounted wireless communication apparatus according to claim 26 or 27 or 28, or the vehicle-mounted wireless communication system according to claim 29.
